# EUROPEAN PATENT APPLICATION

(11) **EP 4 368 266 A1**
(43) Date of publication of application: **15.05.2024**
(21) Application number: 23204355.4
(22) Date of filing: 18.10.2023
(51) Int. Cl.: A63F 13/285

(54) **METHODS AND SYSTEMS FOR PROVIDING IN-GAME NAVIGATION**

(30) Priority: 08.11.2022 GB 202216609
(71) Applicant: Sony Interactive Entertainment Inc., Tokyo 108-0075 (JP)
(72) Inventor: MURPHY, Alan, London, W1F 7LP (GB); ARMSTRONG, Calum, London, W1F 7LP (GB)
(74) Representative: D Young & Co LLP

(57) **Abstract**

According to the present invention there is provided an system for providing tactile navigation guidance in a video game environment. The system comprises: a detection unit configured to detect at least part of surroundings of a player in the game environment and a guidance unit configured to adjust a tension level of at least one variable tension input on a controller. The adjustment is made in dependence on the result of detection by the detection unit so as to indicate to a user at least a subset of the detected surroundings through the controller.

## Description

The present invention relates to methods and systems for providing in-game navigation, and in particular methods and systems for providing tactile navigation guidance within a video game environment.

### BACKGROUND

Media content in recent years has become increasingly multi-sensory. In addition to the visual graphics displayed on a monitor and audio elements output from speakers, various sensory cues such as haptic feedback can be employed to provide a tactile sense of 'touch', in movies and music but particularly in video games.

However, even with an increasingly wide variety of sensory media available to communicate information to users, some can still experience difficulties in navigating in-media environments. For example, blind and partially sighted video game users may find it difficult to maintain a full understanding of the environment around an in-game character under their control. Many games have dark environments which are often difficult to see, even with full vision, making navigation a particularly difficult task. A dark corridor in a haunted house may have doors and passageways through which users are expected to pass, but the low light conditions may mean some of those passageways get overlooked.

Various attempts have been made to improve navigation; such attempts often relate in some way to increasing visibility. For example, most modern games include an option to increase brightness and contrast, or to artificially place bright, noticeable markers near open passageways to guide a user. Some games also include audio cues to notify users of a direction of travel. However, these modifications can in some cases reduce the overall user experience of the game. Game designers often painstakingly design their environments to produce a specific atmosphere for the user, and such visual and aural alterations can take away from the desired aesthetic of the game.

It is therefore desirable to provide an alternative solution to improve accessibility and navigation in media content, particularly video games, whilst minimising loss from the overall visual or aural experience.

The present invention seeks to mitigate at least some of the above problems.

### SUMMARY OF THE INVENTION

According to an aspect of the disclosure, there is provided a system for providing tactile navigation guidance in a video game environment, the system comprising: a detection unit configured to detect at least part of surroundings of a player in the game environment; a guidance unit configured to adjust a tension level of at least one variable tension input on a controller, wherein the adjustment is made in dependence on the result of detection by the detection unit so as to indicate to a user at least a subset of the detected surroundings through the controller.

The system is arranged to provide assistance to users playing a video game by giving sensory feedback to the user to convey information about the user's in-game surroundings. The video game may typically be operable through use of a controller. That controller may comprise one or more variable tension inputs.

An input may be defined as any means for allowing the instigation (by a user, for example) of an input signal through the controller. Examples of such inputs include buttons, triggers, directional pads, touch sensitive pads, analogue sticks and the like. Inputs on such controllers may typically be arranged for actuation by a user's finger, for example through a depression force causing the input to travel in a direction of actuation. A button for example may typically be arranged for a user to press down upon, and a trigger may typically be arranged for a user to pull on, causing the trigger to slide or rotate about an axis. The input may be arranged for discrete input (i.e., on/off, digital input), or for continuous input (i.e., analogue input). The input may be pressure-sensitive, touch-sensitive or travel dependent, meaning that the level of analogue input is dependent on how far the input is actuated. User input via any input on the controller may be configured to send an input to a video game console, computer or mobile gaming device for example through corresponding input signals.

By variable tension input, it is intended to mean that the input has capability to selectively control the force or tension required to actuate the input. In some examples this may be achieved by the provision of a counter force to provide a resistance against which the user must overcome in order to actuate the input. Such a counter force can be provided by one or more motors for example, as described below. The direction of the counter force may typically be in the opposite direction to a direction of actuation of the input. For example, if a button is arranged for a user to press down on, the variable tension input may be configured to present a variable counter force in the opposite direction - i.e., up - so as to oppose the user actuation of the input. If a trigger is arranged for a user to pull and cause rotation clockwise about an axis, the variable tension input may be configured to present a variable counter force in the anti-clockwise direction about the same or similar axis. The feeling of resistance due to such effects may be referred to as 'tension' of the variable tension input. The level of tension can be controlled or varied by the controller for example by the controller itself (e.g., circuitry or processor on-board the controller) or by the gaming system. Such control may involve the controlling of electrical signals to the controller or components exerting tension, such as a tensioning unit as described herein. An example of a controller with a variable tension input is the Sony ^{®} DualSense ^{®} controller, which has two variable tension triggers.

The level of tension on the variable tension input may be adjusted to provide a certain effect to imitate reality in a virtual setting, such as the feeling of a taut bow string or the weight and tension of a gun trigger. The tension may also be controlled to communicate certain events and/or ambience to the user. For example, the tension on the input may be rapidly adjusted to provide a vibrating or rumble effect, to indicate certain in-game events or ambience. Such tension may therefore be derived from in-game events. Typically, the user may have at least one part of the hand (e.g., a finger) in contact - with or without actuating force - on the input. The level of tension on the input may act as an opposing force which may communicate certain information to the user. By adjusting the tension level based on the result of detection of the in-game surroundings, it is possible to communicate to the user information about their surroundings in the game environment through the (or each) variable tension input. Where multiple variable tension inputs are associated with the apparatus or system, each input may be adjusted separately to convey multi-channel information to the user, as detailed herein.

Herein, the term 'tension level' may be used generally to denote the level of tension applied to a variable tension input. Such a level may be specifically measured by the amount of counterforce applied to the input. For example, an input at a maximum tension level may apply a constant 1N counterforce throughout the full range of its motion or actuation. The application of 50% tension level in such a case may mean that a constant counterforce of only 0.5N is applied instead. The tension level may also be measured by the amount of actuation of the input that is allowed before a counterforce is applied. For example, if a trigger has a 50% tension level it may mean that the user is able to actuate the trigger to 50% of its full range of motion or rotation without the application of any counterforce, and then once the trigger hits 50% actuation a counterforce kicks in. Although the term 'counterforce' is used herein, the tension level may affect the variable tension input to exert a force even in the absence of an actuating force. That is, the tension level of an input may be adjusted to move the position of the input from a first position to a second position.

In a game environment a user may be represented by a controllable presence in space (e.g., 2D, 3D) referred to generally as a 'player' in the game. The player may be represented by an avatar (e.g., an animated humanoid character), by a vehicle (e.g., a car in a racing game) or by any other object or means. Typically, the player may be controllable by the user within the game space to navigate regions available and accessible to the player. Such a game environment may generally contain objects which present physical barriers to movement of the character. For example, a room may comprise four walls which are generally impenetrable except at certain points such as through a doorway, and the room may comprise objects such as a table or box through which the player cannot freely move. In other words, such objects block the path of a freely moving user. Objects or environmental details which block free movement of the player may be described as obstacles. In some situations a visual representation of such obstacles on the screen may not be sufficient to notify the player of a blocked access. The detection unit may be configured to detect the presence of obstacles proximate to the player in the video game. 'Proximate' in this context may mean within an absolute predetermined distance within the game space, or within a predetermined time-to-reach that may be dependent upon in-game speed. The guidance unit may then adjust the tension on the variable tension input in dependence, at least in part, on the detection of such obstacles by the detection unit. For example the guidance unit may react by increasing or decreasing tension of one or more variable tension inputs when an obstacle is detected near the player. In another example, the guidance unit may react by increasing or decreasing tension of one or more variable inputs when the player moves to an area absent of obstacles. This may be useful for example if a player is walking down a hallway and passes an open door on one side of the player. The guidance unit may adjust the tension to communicate to the user that they are proximate to an area absent of obstacle - i.e., an area accessible to the user. The detection unit may also detect a spatial distribution of objects, players and/or obstacles proximate to the player. Such detected spatial distribution may be communicated to the user by appropriately adjusting the tension of variable tension input(s). Where multiple variable tension inputs are associated with the system, the directionality of the detected objects may be communicated to the user by selectively adjusting, by different amounts, the tension of the multiple variable tension inputs. In some examples, multiple controllers each having one or more variable tension inputs may be linked to one system. In such a case, the spatial position of each such controller (absolute or relative to each other) may be taken into account by the guidance unit and affect the tension at each input. Where one or more controllers are used for virtual reality, typically in combination with a head mounted display HMD, the absolute or relative orientation/position of the user (and/or HMD) may be taken into account by the guidance unit when calculating and/or adjusting the tension level at the inputs on those controllers.

In some examples the game environment may comprise other in-game players, some or all of which may be controlled by other users (for example in a local or online multiplayer game). The triggers may react to indicate the presence of one or more players. The detection may also be made from the point of view of the other users or players.

In some examples, the system may be arranged to allow a user to specify a type of object, obstacle or avatar (e.g., other player) for which the user wishes to be notified when detected in proximity of the player. In some examples the detection unit may be configured to receive a user input of a target (or type of target) and the guidance unit may be configured to adjust the tension level of at least one variable tension input on the controller depending on a presence of the target (or type of target) detected by the detection unit.

The system may be separate from the controller, in that it is configured to process in-game events and environments and to appropriately provide an output to control the variable tension input on a controller. The system may be part of a processor or computer system such as a video game console. In some examples, the system itself may comprise a controller for controlling the video game (for example a wired or wireless controller coupled to the videogame console), the controller having at least one input with variable tension. One or more of the detection unit and guidance unit may be connected to, or on-board, the controller.

The system may further comprise one or more tensioning units. The at least one variable tension input may be connected to a tensioning unit, configured to selectively provide a counterforce in a direction opposite to a direction of actuation of the input. The tensioning unit may be on-board the controller, and connected directly to the one or more variable tension inputs. One tensioning unit may be connected to one or more variable tension inputs. Typically, the tensioning unit may comprise a motor configured to selectively provide a tactile force to a connected variable tension input. In some examples a tensioning unit may comprise a magnet for providing the selective counterforce. In such examples, the guidance unit may be configured to adjust the tension of the variable tension inputs by controlling a signal to the one or more tensioning units.

The controller may comprise a variety of inputs operable by the user. The controller may comprise at least one directional input. By directional input, it is intended to mean one or more inputs which provide a sense of orientation or directionality, for example a D-pad or analogue stick, or alternatively or in addition motion detection means such as an accelerometer and/or gyroscope. The detection unit may be configured to detect the surroundings of the player in a direction indicated by the at least one directional input. That is to say, the user may select a particular direction using the directional input (e.g., by pointing the analogue stick left, or by pointing the whole controller in the particular direction), and the detection unit may configured to detect the surroundings of the player in that particular direction (e.g., detect obstacles to the immediate left of the player).

The controller may comprise a plurality of variable tension inputs. In some examples, the plurality of variable tension inputs may be distributed across multiple controllers or peripherals. The guidance unit may be configured to adjust the tension of each of the inputs based on a spatial location or distribution of detected obstacles proximate to the player. For example, the controller may comprise a 'right' variable tension input and a 'left' variable tension input, respectively located on right and left sides of the controller when held by the user. The tension level at each of the right and left inputs may be adjusted according to the corresponding spatial location or distribution of objects, players or obstacles in the game - for example where a pathway is detected to be to the right of the player, the tension at the right input may be adjusted to convey this, whilst the left input tension may be kept the same. In this way, information about the spatial location of objects and pathways in the game can be conveyed to the user without the need for visual or aural cues.

The guidance unit may be configured to rapidly adjust the tension of at least one variable tension input so as to simulate a tactile impact, such as a click, to the user.

The guidance unit may be configured to simulate tactile clicks at a periodic frequency. The frequency may be adjusted according to the detected obstacles proximate to the player. For example, the number of clicks may increase as an object, player or obstacle becomes closer in spatial distance to the player or time-to-reach for the player. In this way, not only the direction but also the distance of objects and obstacles can be conveyed to the user through the tensioned inputs. Conversely, the clicks may be simulated in dependence on detected free space such as passageways or openings in a similar manner. That is, the click frequency may depend on directions clear of obstacles, such as for example along a path.

Optionally, the detection unit may be configured to determine when a scene is too dark for navigation. When such a detection is made, the guidance unit may be activated to adjust the tension levels of the variable tension inputs. The determination may be made by monitoring the overall gamma levels of the master graphical output. When the overall brightness dips (or consistently stays, for a predetermined period of time) below a threshold value, the detection unit may determine that it is too dark for the user to practically navigate the scene. In other examples, analysis of the contrast may be carried out. For example where a brightly lit source is in view, other areas of the screen may not be as visible (even if the overall average brightness is not low, due to the bright source). In this context, 'too dark' may be a function of a gamma or brightness calibration or similar set by the user through an interface of the game. Hence for example users with different degrees of eyesight may directly or indirectly choose correspondingly different settings that indicate what is 'too dark' for them.

According to another aspect of the present disclosure, there is provided a method for providing tactile navigation guidance in a video game environment, the method comprising: detecting at least part of surroundings of a player in the game environment, and adjusting a tension level of at least one variable tension input on a controller in dependence on at least a subset of the detected surroundings of the player.

The step of adjusting the tension of the variable tension input may comprise sending a signal to a tensioning unit connected to the variable tension input, to selectively provide a counterforce in a direction opposite to the direction of actuation of the input.

The step of detecting surroundings of the player may comprise detecting a directional input from the controller, associating the directional input to a direction relative to the player in the game environment, and detecting the presence of obstacles proximate to the player in the associated direction in the game environment. In this way, the system can 'check' for obstacles (or free space as lack thereof) in whatever direction the user specifies. The direction may be specified by user input through discrete buttons (e.g., D-pad), analogue input (e.g., directional analogue sticks), or otherwise (e.g., accelerometer or gyro input). The user may for example 'sweep' across the full 360 degree range of an analogue stick, and a trigger tension may vary according to how far the nearest obstacle is in the direction specified by the analogue stick throughout the sweep. Similarly, alternatively or in addition the user may sweep the controller in an arc whilst holding their finger(s) on one or more variable tension inputs to feel how the trigger tension may vary according to how far the nearest obstacle is in the direction that the controller is pointing.

The step of adjusting the tension level of the variable tension input may comprise rapidly varying the tension level to generate a tactile click to the user. The step of detecting presence of obstacles proximate to the player may comprise identifying a direction relative to the player in the game environment clear of any obstacles as an open direction and detecting when the player is oriented in the open direction, and wherein the step of adjusting tension of the variable tension input may comprise generating a rapid change of tension so as to generate a tactile click to the user when the player is oriented in the open direction.

The method may also include, as a first step, checking whether or not the guidance is necessary or required. That is, the method may include a first step of checking whether the surroundings are too dark for the user to see. This may be done by receiving user input, or by determining the brightness or contrast of the scene. Such a step may comprise checking detected brightness or contrast levels against a threshold. It will be appreciated that any one or combination of the features described with respect to each aspect of the disclosure may be adapted and/or applied to another of the aspects described herein, with their associated effects and advantages.

### BRIEF DESCRIPTION OF THE DRAWINGS

The invention will now be described by way of example with reference to the accompanying drawings, in which:
- Figure 1A schematically illustrates a front view of an example controller for interfacing with a video game environment.
- Figure 1B schematically illustrates a side view of an example controller for interfacing with a video game environment.
- Figure 2 schematically illustrates a cross-sectional view of a variable tension input located on an example controller.
- Figure 3 is a schematic block diagram of an example system according to an aspect of the disclosure herein.
- Figure 4A illustrates an example video game environment.
- Figure 4B schematically illustrates how an example controller may be made to respond to the video game environment of Figure 4A.
- Figure 5A illustrates an example video game environment.
- Figure 5B schematically illustrates how an example controller may be made to respond to the video game environment of Figure 5A.
- Figure 6 is a flow chart schematically illustrating steps of an example method as disclosed herein.

### DETAILED DESCRIPTION OF EXAMPLES

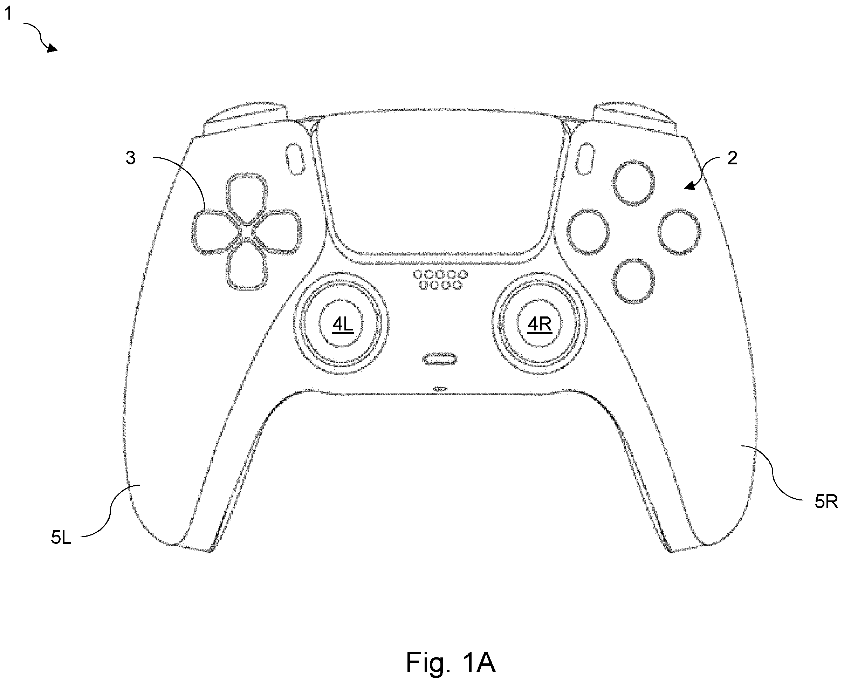

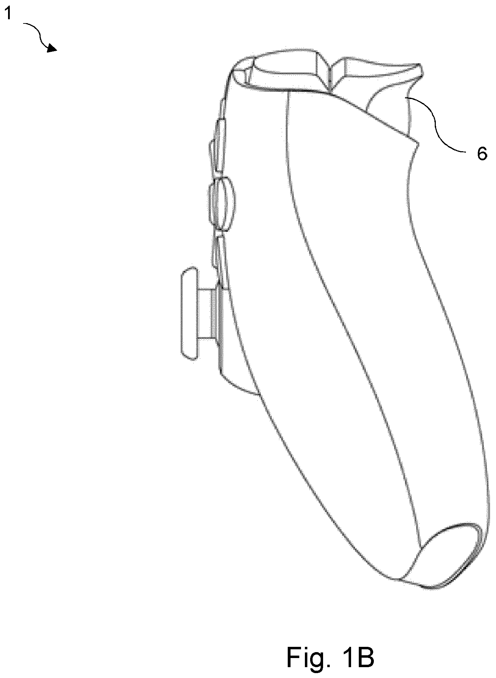

An aspect of the present disclosure relates to a system for providing tactile navigation assistance. The system can provide an output to control tactile assistance to a video game controller, for example. An exemplary controller through which such tactile assistance may be implemented is illustrated in Figures 1A and 1B.

The controller 1 comprises a variety of inputs to allow a user to operate actions and events within a video game environment. The controller 1 is designed to be held by a user by both hands and comprises handles 5R and 5L to allow the user to maintain grip, generally with their right and left hands respectively.

Discrete input buttons 2 are located on the right hand side, generally designed for users to press with fingers on their right hand, and directional pad 3 is located on the left hand side, generally designed for users to press with fingers on the left hand. The controller 1 also comprises inputs on the top edge, known as 'shoulder buttons'.

Analogue sticks 4R and 4L are analogue inputs generally known in the art and allow the user to provide input across a range of directions and magnitudes. For the purposes of this patent it is to be understood that the analogue sticks 4R and 4L are capable of obtaining from the user input across a 360 degree continuous angular rotation and continuous radial inputs from 0 to 100%.

The controller 1 also comprises a pair of triggers, one of which can be most clearly seen in the side profile of Figure 1B. The user can pull the trigger 6, typically with their index or middle finger, to actuate the input. The trigger 6 rotates about and axis and is an analogue input in that the magnitude of the input depends on how far the trigger 6 is actuated by the user.

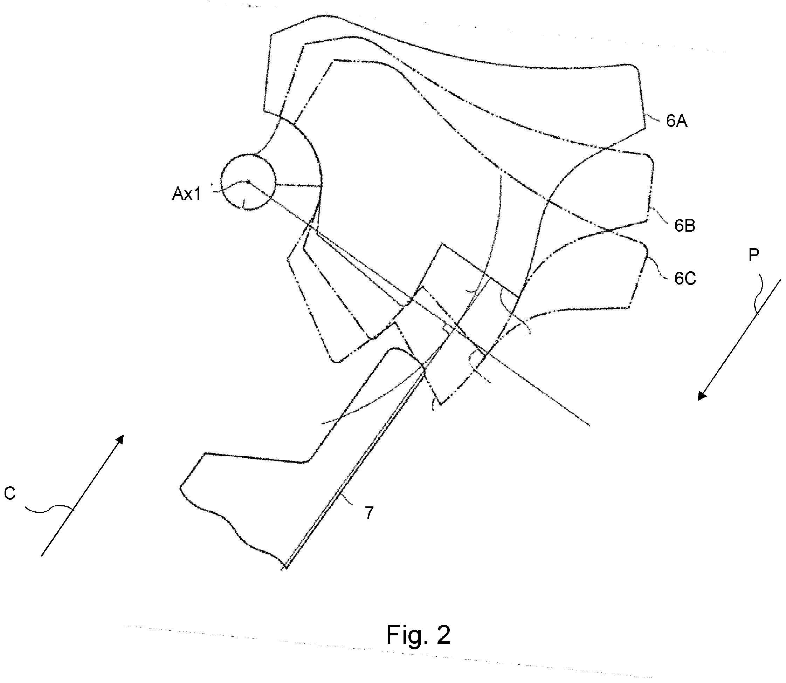

Figure 2 provides a simplified cross-sectional view of a mechanism under which the trigger 6 can operate, as the user actuates the trigger 6 through various levels of actuation.

At position 6A the trigger is at 0% actuation. That is to say that the trigger is at its rest position, which may be a position supported through a biasing force provided for example by a spring through elastic energy. The trigger 6 is anchored at a pivot point Ax1 which acts as the axis about which the trigger 6 can rotate.

When the user actuates the input by pulling on the trigger 6, an actuating force P is generated which, through the axis Ax1, results in a rotational force in the clockwise direction in this figure. As the user pulls on the trigger 6, the rotational force causes the trigger 6 to rotate clockwise, first passing 50% actuation at position 6B and then once the trigger 6 has reached its maximum range of motion, it arrives at position 6C with 100% actuation complete.

It will be appreciated that the positions described herein with respect to Figure 2 is for concept illustration purposes only and that the angles of the range of motion may differ from those illustrated in the figure.

As noted above, there may be a biasing force designed to urge the trigger back to the start position of 0% actuation, so that when a user is not holding the trigger it will naturally return to the rest position. The user may therefore have to apply a sufficient force to overcome at least the biasing force. The overall force needed to be overcome in order to actuate the trigger may generally be referred to as the tension of the trigger 6.

In this example controller 1, the trigger 6 is a variable tension input. That is to say that the tension of the trigger can be selectively varied.

A drive member 7 for providing a counterforce against actuation is in communication with the trigger 6. Whilst in some cases the communication between the drive member 7 and trigger 6 can take various forms such as magnetic coupling, in this example the drive member 7 is in physical contact with an underside of the trigger 6. The drive member 7 is coupled to a motor which selectively provides a force C - referred to herein as a counterforce - opposing the actuation force of the trigger 6. In other words, the motor is configured to drive the driving member 7 against the trigger 6 so as to oppose the clockwise rotational motion of the trigger 6. The driving member 7 may move linearly, or it may also move rotationally, but its main purpose is to provide a selective and variable counterforce to act as tension against which the user must overcome in actuating the trigger 6.

The tension applied to the trigger 6 by the motor can be adjusted according to signals from a gaming system, for example. This may be in response to changes or events in the game environment operated by the controller.

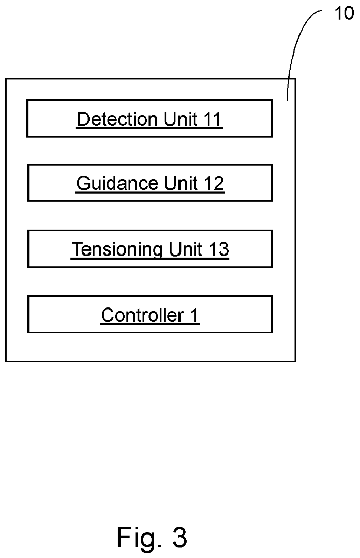

According to an aspect of the invention, a system can be in communication with in-game events and environments to determine an appropriate level of tension in dependence on such in-game information. An example system according to an aspect of the disclosure is represented by means of a block diagram in Figure 3.

In this example the system 10 comprises a detection unit 11 and a guidance unit 12.

The detection unit 11 is in communication with a game processor running a video game environment, and is configured to detect surroundings of a player in the game environment.

The guidance unit 12 is in communication with the detection unit 11 and is configured to determine a tension level of at least one variable tension input on a controller. The tension level is determined by the guidance unit 12 in dependence on the result of detection by the detection unit 11. The aim of the detection unit 11 and guidance unit 12 is to determine and generate a tension level at a controller based on the surroundings of a player in the game environment, so as to convey environmental information to the user through the tension they experience when attempting to actuate a variable tension input on their controller.

In this example, the system 10 further comprises a controller 1 similar to that described in relation to Figures 1A and 1B. The system 10 further comprises a tensioning unit 13. In this example system the tensioning unit 13 is located on the controller 1 and includes a drive member 7 and motor arranged as described in Figure 2, to provide selective tension to variable tension inputs on the controller.

The system 10 may constitute or comprise a computer configured to implement methods disclosed herein. The computer may comprise a processor, at least one memory and an input/output interface. The processor may execute instructions stored in the memory in order to perform such methods. The input/output interface may be configured to receive media data and output a generated haptic signal. The computer may be located at a game console or at a connected controller or other peripheral.

In use, the detection unit 11 detects the environment around a player in the game environment. When the satisfaction of certain environmental conditions are detected, the guidance unit 12 outputs a signal to the tensioning unit 13 to change the tension level of at least one variable tension input 6 on the controller 1 in order to communicate to the user the meeting of those conditions through tactile feedback.

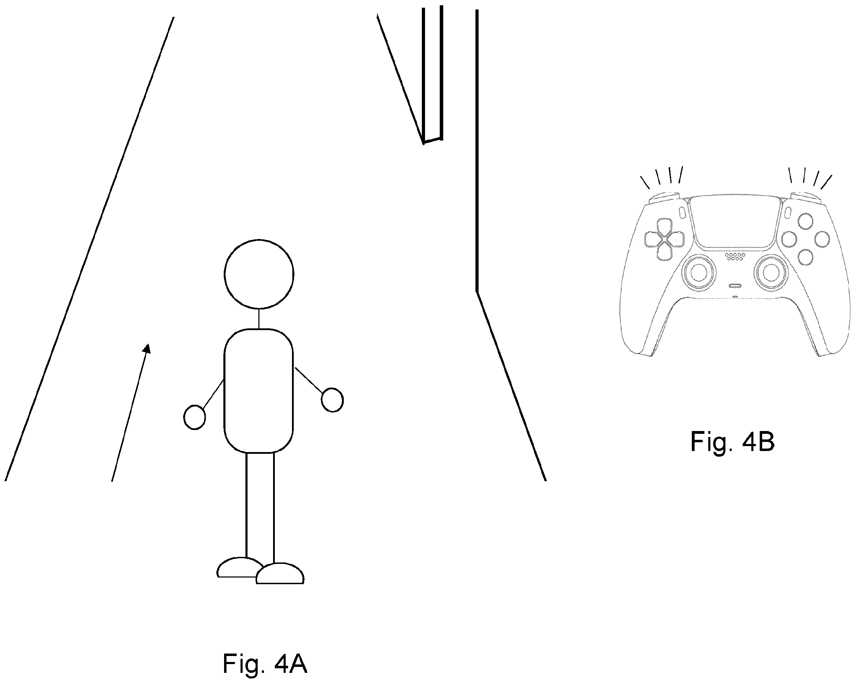

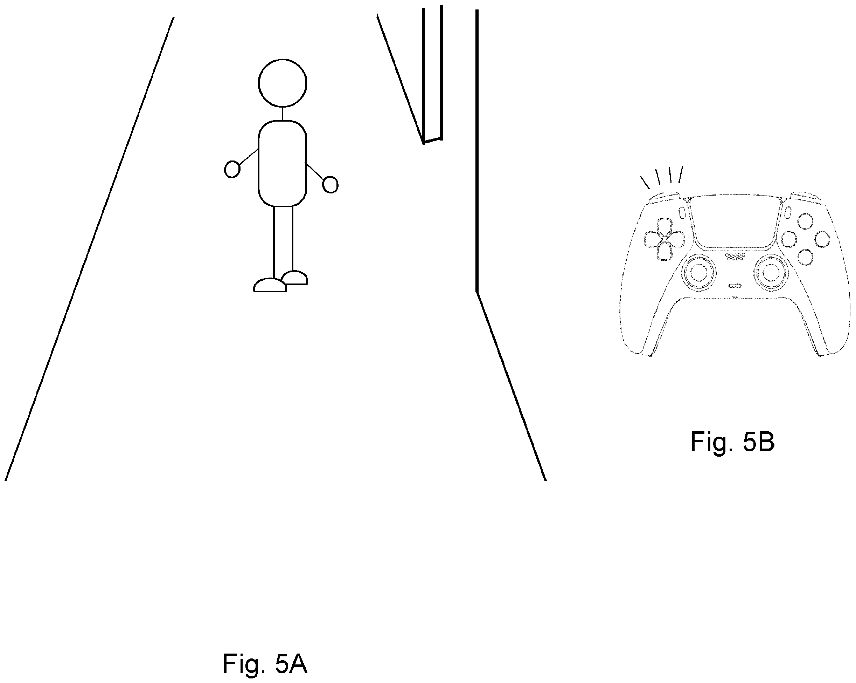

An example use case of such a system is illustrated in Figures 4A, 4B, 5A and 5B.

In Figure 4A, a player controlled by the character is walking along a dark corridor in a forward direction shown by arrow F. It may be so dark that the corridor environment is difficult to see. The user is controlling the character (also referred to as player) using the controller 1 shown in Figure 4B. As the user controls the character to move forwards, he keeps his finger right index finger on the right trigger 6R and his left index finger on the left trigger 6L, both of which are controlled to be at an initial tension level - for the purposes of this example, the initial tension level is at 50%. The user applies a light actuation force against the triggers but does not fully depress or actuate them.

In this simple example, one condition being monitored is the presence of a free path (or conversely the absence of obstacles). The player is currently surrounded on both sides by walls blocking free movement. In other words, the player has obstacles on both his right and his left sides.

As the player progresses forward, he approaches an opening (e.g., a door or pathway) on his right hand side as illustrated in Figure 5A. The detection unit 11 detects this change in environment on the right hand side and the guidance unit 12 controls the tensioning unit 13 on the controller 1 to adjust the counterforce tension on right trigger 6R. In this example, the tension is now adjusted to be at 0%, so the user is suddenly able to freely and fully actuate the trigger without counterforce (except any biasing force as noted above). As, up until this point, the user has been lightly depressing the right trigger balanced by the counterforce, the sudden absence of tension results in his finger further depressing the trigger, creating a sensation of the finger 'falling through'. This simulates the feeling of running a finger against the wall and when an opening suddenly appears, the finger falling through as there is no longer a counterforce from the wall. In this way, the user is notified of the change of environment, as only the right trigger has changed in tension, and it can be understood that an opening exists on the right hand side without any additional visual cues.

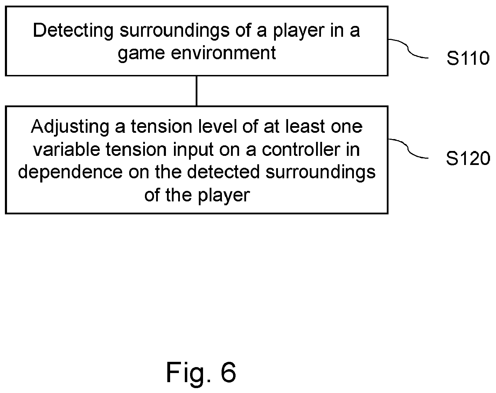

Figure 6 is a flowchart schematically illustrating steps of a general method 100 according to the invention.

At step S110, the surroundings of a player in a game environment are detected.

Optionally, in an example method, the step S110 can comprise a further set of steps to provide directional detection. At step S111, directional input from the controller is detected. At step S112, the detected directional input is associated to a direction in the game environment. Typically, the detected directional input is associated to a direction relative to the player in the game environment. At step S113, the presence of obstacles proximate to the player in the associated direction is detected.

In a further optional step S114, a direction in the game environment can be identified as an open direction. For example, this step can identify as an open direction a direction relative to the player in the game environment which is clear of any obstacles. In other examples, the open direction can be defined as the direction in which target locations or objectives are located in the game environment (e.g., a waypoint).

At step S120, the tension level of at least one variable tension input on a controller is adjusted. The adjustment is done in dependence on the surroundings of the player detected at step S110.

In an optional example, the step S120 can comprise a further step S121 of sending a signal to a tensioning unit connected to the variable tension input. The signal is configured to operate the tensioning unit to selectively provide a counterforce in a direction opposite to a direction of actuation of the input.

Where the method comprises the optional step S114 of identifying at least one open direction, the step S120 may comprise a further step S122 of generating a rapid change of tension so as to simulate a tactile click to the user when the player is oriented in the open direction.

It will be appreciated that the above methods may be carried out on one or more processors of conventional hardware (such as that described elsewhere herein, e.g. a video game console and/or controller) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public

## Claims

1. A system for providing tactile navigation guidance in a video game environment, the system comprising:
a detection unit configured to detect at least part of surroundings of a player in the game environment; and
a guidance unit configured to adjust a tension level of at least one variable tension input on a controller, wherein the adjustment is made in dependence on the result of detection by the detection unit so as to indicate to a user at least a subset of the detected surroundings through the controller.

2. The system according to claim 1, wherein the detection unit is configured to detect presence of obstacles proximate to the player in the video game.

3. The system according to claim 2, wherein the detection unit is configured to detect a spatial distribution of obstacles proximate to the player, and the adjustment of the tension level is made at least in partial dependence on the detected spatial distribution.

4. The system according to any preceding claim, wherein at least one variable tension input is connected to a tensioning unit configured to selectively provide a counter-force in a direction opposite to a direction of actuation of the input.

5. The system according to claim 4, wherein the guidance unit is configured to adjust the variable tension of the input by controlling a signal to the tensioning unit.

6. The system according to any preceding claim, comprising a controller for controlling the video game, the controller having at the least one input with variable tension.

7. The system according to any preceding claim, wherein the controller comprises a plurality of variable tension inputs and the guidance unit is configured to adjust the tension of each of the inputs based on a spatial distribution of detected obstacles proximate to the player.

8. The system according to claim 7, wherein the controller comprises a first variable tension input and a second variable tension input, and the guidance unit is configured to adjust the tension at the first input according to obstacles detected on a corresponding first side of the player, and to adjust the tension at the second input according to obstacles detected on a corresponding second side of the player.

9. The system according to any preceding claim, wherein the guidance unit is configured to rapidly adjust the tension of at least one variable tension input so as to simulate a tactile click to the user.

10. A method for providing tactile navigation guidance in a video game environment, the method comprising:
detecting at least part of surroundings of a player in the game environment, and
adjusting a tension level of at least one variable tension input on a controller in dependence on at least a subset of the detected surroundings of the player.

11. The method according to claim 10, wherein the step of adjusting the tension of the variable tension input comprises sending a signal to a tensioning unit connected to the variable tension input, to selectively provide a counter-force in a direction opposite to the direction of actuation of the input.

12. The method according to any of claims 10 and 11, wherein the step of detecting surroundings of the player comprises:
detecting a directional input from the controller;
associating the directional input to a direction relative to the player in the game environment, and
detecting the presence of obstacles proximate to the player in the associated direction in the game environment.

13. The method according to any of claims 10 to 12, wherein the step of adjusting the tension level of the variable tension input comprises changing the tension rapidly to generate a tactile click to the user.

14. The method according to any of claims 10 to 13, wherein the step of detecting presence of obstacles proximate to the player comprises:
identifying a direction relative to the player in the game environment clear of any obstacles as an open direction, and
detecting when the player is oriented in the open direction, and wherein the step of adjusting tension of the variable tension input comprises generating a rapid change of tension so as to generate a tactile click to the user when the player is oriented in the open direction.

15. A computer program comprising computer executable instructions adapted to cause a processor to perform the method of any one of claims 10-14.
